# EUROPEAN PATENT APPLICATION

(11) **EP 3 147 413 A1**
(43) Date of publication of application: **29.03.2017**
(21) Application number: 16190513.8
(22) Date of filing: 23.09.2016
(51) Int. Cl.: E03C 1/02, F16K 11/044

(54) **MINI WATER ROUTE STRUCTURE**

(30) Priority: 25.09.2015 CN 201520750774 U
(71) Applicant: Xiamen Runner Industrial Corporation, Jimei Xiamen, Fujian 361021 (CN)
(72) Inventor: CHEN, CAN-XIANG, Xiamen Fujian 361021 (CN); CHEN, XI-MIN, Xiamen Fujian 361021 (CN); ZHANG, RONG-GUI, Xiamen Fujian 361021 (CN); ZHENG, SHI-MING, Xiamen Fujian 361021 (CN)
(74) Representative: Cabinet Chaillot

(57) **Abstract**

A mini water route structure comprises: a water route piece and a plurality of water route switches (1). The water route piece includes: a water input end (3), connected to an outside water route member; a water output end (4), connected to the outside water route member; a water passage channel, with its two ends connected respectively to the water input end (3) and the water output end (4); and a switch installation portion, formed integrally into a body, and is connected to the water passage channel along a direction of a water route. The plurality of water route switches (1) is disposed on the switch installation portion in sequence along the direction of the water route, and are connected in series using their internal water routes. By using mini water route structure, more water route switching can be achieved on a household water utility device.

## Description

### BACKGROUND OF THE INVENTION

### Field of the Invention

The present invention relates to a water route structure, and in particular to a mini water route structure.

### The Prior Arts

In an ordinary household water utility device, a water route switching structure is essential. However, the conventional water route switching structure contains quite a few components, so it occupies a rather large space to function. As such, when it is installed on a water utility device (such as a faucet or a shower head) of small volume, it is only capable of switching a few water routes.

Therefore, presently, the design and performance of the water route structure is not quite satisfactory, and it leaves much room for improvement.

### SUMMARY OF THE INVENTION

In view of the problems and drawbacks of the prior art, the present invention provides a mini water route structure, in which a water route switch and a switch installation portion are formed integrally into a body, to reduce the space occupied by the mini water route structure. As such, it is capable of switching much more water routes for a water utility device of a small volume.

The present invention provides a mini water route structure, including: a water route piece and a plurality of water route switches. The water route piece includes a water input end, connected to an outside water route member; a water output end, connected to the outside water route member; a water passage channel, with its two ends connected respectively to the water input end and the water output end; and a switch installation portion, formed integrally into a body, and is connected to the water passage channel along a direction of a water route. The plurality of water route switches are disposed on the switch installation portion in sequence along the direction of the water route, and are connected in series using their internal water routes.

In the mini water route structure mentioned above, the operation mode of the mini water route structure can be classified into a direct output mode and a series shunt mode, while a water passage channel inner chamber acts in cooperation with the water route switch in water route switching. When the water route switch is in a direct output mode, water flowing through the water route switch is guided to the water output end of the water passage channel by the water passage channel inner chamber. When the water route switch is in a series shunt mode, water flowing through the water route switch is guided to a subsequent water route element connected in series with the water route switch, by the water passage channel inner chamber.

In an aspect of the present invention, the water passage channel and the switch installation portion are formed integrally into a body.

In another aspect of the present invention, the water passage channel and the switch installation portion are formed integrally into a body through injection molding.

In yet another aspect of the present invention, the mini water route structure further includes: a driving piece, disposed and connected onto the water route switches, to drive the water route switches to switch between operation modes.

In a further aspect of the present invention, when the water route switch is in the series shunt mode, and in case the water route switch is the last one of a sequence disposed on the switch installation portion, then water flowing through the water route switch is guided by the water passage channel inner chamber to the water output end of the water passage channel; and in case the water route switch is not the last one of a sequence disposed on the switch installation portion, then the water flowing through the water route switch is guided by the water passage channel inner chamber to a next water route switch connected in series with the water route switch.

In the present invention, the switch installation portion is formed integrally into a body, and it is connected to the water passage channel along a direction of a water route. A plurality of water route switches are disposed on the switch installation portion in sequence along the direction of the water route, and are connected in series together using their internal water routes. In such a structure, the water route switches can be arranged in the mini water route structure in a compact manner, to reduce the volume of the mini water route structure.

In the present invention, the plurality of water route switches are connected in series using their internal water routes. The operation mode can be classified into a direct output mode and a series shunt mode, such that the water passage channel inner chamber acts in cooperation with the water route switch in water route switching. When the water route switch is in the series shunt mode, and in case the water route switch is the last one of a sequence disposed on the switch installation portion, then the water flowing through the water route switch is guided by the water passage channel inner chamber to the water output end of the water passage channel. Otherwise, in case the water route switch is not the last one of a sequence disposed on the switch installation portion, then the water flowing through the water route switch is guided by the water passage channel inner chamber to a next water route switch connected in series with the water route switch. In such a structure, the operation mode of the water passage channel inner chamber matches that of the water route switch, to guide water to the water route corresponding to the water route switch, in realizing switching water between various water outputs.

In the present invention, the water passage channel and the switch installation portion are formed integrally into a body through injection molding. Therefore, the connectors that would otherwise be used between them can be eliminated. As such, the spacing between the water route switches can be decreased, to reduce the volume of the mini water route structure, in achieving raising its yield and operation stability.

In the present invention, the water passage channel and the switch installation portion are formed integrally into a body, and a plurality of water route switches are disposed on the switch installation portion in sequence along the direction of the water route, and are connected in series using their internal water routes. A driving piece is disposed and connected onto the water route switch, to drive the water route switch to switch between the operation modes. Since the mini water route structure is formed integrally, so it may provide high structure strength on a small volume. As such, the mini water route structure may use water route switch of a smaller size, while keeping spacing between the water route switches small. In this way, the number of water routes switched can be increased, while the driving force required to drive the water route switch can be reduced, to make it easier to work with the outside control circuit.

Further scope of the applicability of the present invention will become apparent from the detailed descriptions given hereinafter. However, it should be understood that the detailed descriptions and specific examples, while indicating preferred embodiments of the present invention, are given by way of illustration only, since various changes and modifications within the spirit and scope of the present invention will become apparent to those skilled in the art from the detail descriptions.

### BRIEF DESCRIPTION OF THE DRAWINGS

The related drawings in connection with the detailed descriptions of the present invention to be made later are described briefly as follows, in which:
Fig. 1 is an exploded view of a mini water route structure according to an embodiment of the present invention;
Fig. 2 is a cross section view of a mini water route structure according to an embodiment of the present invention; and
Fig. 3 is a schematic diagram of a mini water route structure when it is assembled according to an embodiment of the present invention.

### DETAILED DESCRIPTION OF THE PREFERRED EMBODIMENT

The purpose, construction, features, functions and advantages of the present invention can be appreciated and understood more thoroughly through the following detailed descriptions with reference to the attached drawings.

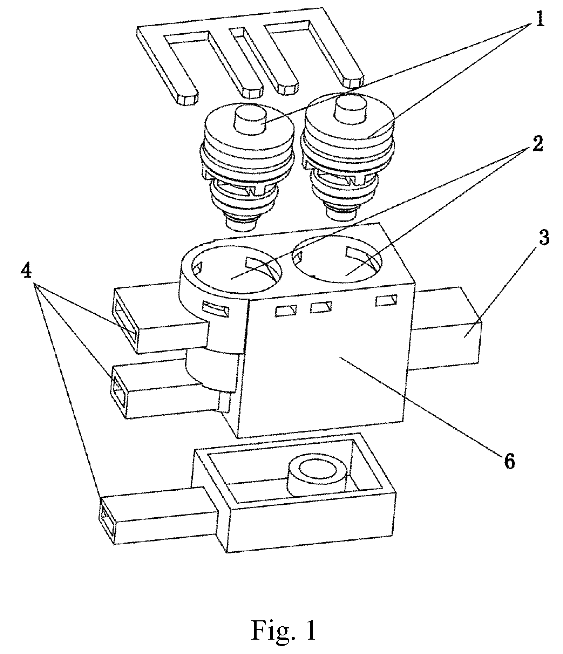

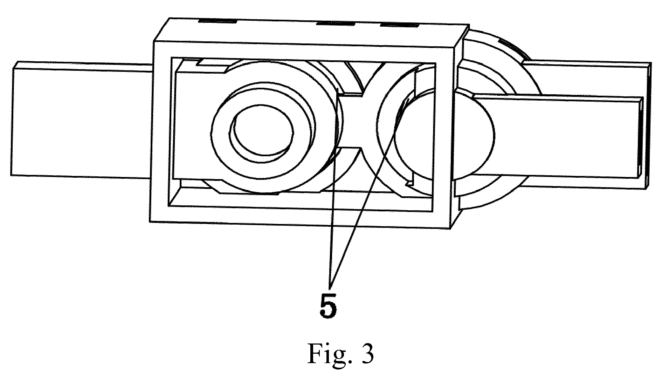

Refer to Figs. 1 and 3 respectively for an exploded view of a mini water route structure according to an embodiment of the present invention; a cross section view of a mini water route structure according to an embodiment of the present invention; and a schematic diagram of a mini water route structure when it is assembled according to an embodiment of the present invention.

As shown in Figs. 1 and 3, the present invention provides a mini water route structure, including: a water route piece 6 and a plurality of water route switches 1. The water route piece 6 includes a water input end 3, connected to an outside water route member; a water output end 4, connected to the outside water route member; a water passage channel, with its two ends connected respectively to the water input end 3 and the water output end 4; and a switch installation portion 2, formed integrally into a body, and is connected to the water passage channel along a direction of a water route. The plurality of water route switches 1 are disposed on the switch installation portion 2 in sequence along the direction of the water route, and are connected in series using their internal water routes.

In the mini water route structure mentioned above, the operation mode of the mini water route structure can be classified into a direct output mode and a series shunt mode, while a water passage channel inner chamber 7 acts in cooperation with the water route switch 1 in water route switching. When the water route switch 1 is in a direct output mode, water flowing through the water route switch 1 is guided to the water output end 4 of the water passage channel by the water passage channel inner chamber 7. When the water route switch 1 is in a series shunt mode, water flowing through the water route switch 1 is guided to a subsequent water route element connected in series with the water route switch 1, by the water passage channel inner chamber 7.

In an embodiment of the present invention, the water passage channel and the switch installation portion 2 are formed integrally into a body.

In an embodiment of the present invention, the water passage channel and the switch installation portion 2 are formed integrally into a body through injection molding.

In an embodiment of the present invention, the mini water route structure further includes: a driving piece, disposed and connected onto the water route switches 1, to drive the water route switches 1 to switch between the operation modes.

In an embodiment of the present invention, when the water route switch 1 is in the series shunt mode, and in case the water route switch 1 is the last one of a sequence disposed on the switch installation portion 2, then water flowing through the water route switch 1 is guided by the water passage channel inner chamber 7 to the water output end 4 of the water passage channel; and in case the water route switch 1 is not the last one of a sequence disposed on the switch installation portion 2, then the water flowing through the water route switch 1 is guided by the water passage channel inner chamber 7 to a next water route switch 1 connected in series with the water route switch 1.

### Embodiment

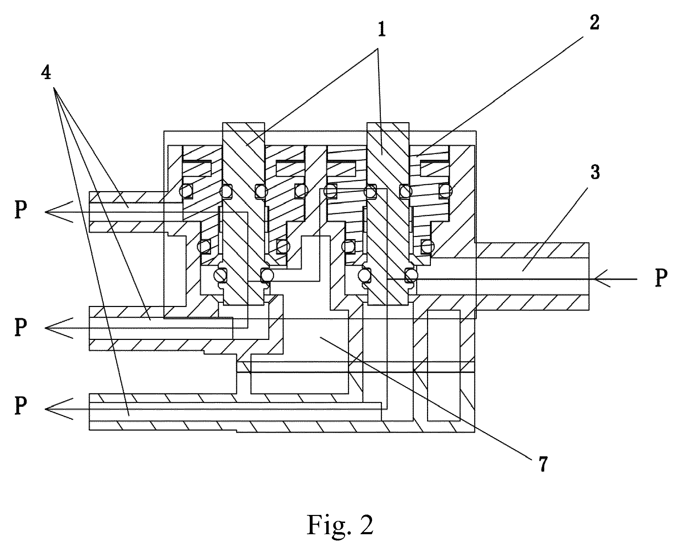

As shown in Fig. 2, a water route switch is each provided on a right upper side and a left upper side of the mini water route structure, while P indicates the direction of water flow. At the water input end 3 is provided with a water input port, while at the water output end 4 is provided with an upper water output port, a middle water output port, and a lower water output port. The three water output ports correspond respectively to three water channels in an outside shower head, and that correspond respectively to three water output modes (for example: fast speed, slow speed, and spray) of the shower head.

When the water route switch 1 on the right upper side is raised up, that water route switch is put in a direct output mode, such that water flowing in from the water input end 3 will flow through the water passage channel, then it flows out of the lower water output port of the water output end 4. As such, the water output of the outside shower head is switched to a spray water output mode.

Alternatively, when the water route switch 1 on the right upper side is pressed down, that water route switch is put in a series shunt mode, such that water flowing in from the water input end 3 will flow through the water passage channel. Then, the water is guided by the water passage channel inner chamber 7 to flow into the water route switch 1 on the left upper side, through the series water route 5 of the water route switch.

At this time, in case the water route switch 1 on the left upper side is raised up, then that water route switch 1 is put in a direct output mode, such that the water flowing in the left side water route switch will flow out from the middle water output port of the water output end 4. As such, the water output of the outside shower head is switched to a slow speed water output mode.

Otherwise, at this time, in case the water route switch 1 on the left upper side is pressed down, then that water route switch 1 is put in a series shunt mode, such that the water flowing in the left side water route switch 1 will flow out from the upper water output port of the water output end 4. As such, the water output of the outside shower head is switched to a fast speed water output mode.

The above detailed description of the preferred embodiment is intended to describe more clearly the characteristics and spirit of the present invention. However, the preferred embodiments disclosed above are not intended to be any restrictions to the scope of the present invention. Conversely, its purpose is to include the various changes and equivalent arrangements which are within the scope of the appended claims.

## Claims

1. A mini water route structure, comprising:
a water route piece, including:
a water input end, connected to an outside water route member;
a water output end, connected to the outside water route member;
a water passage channel, with its two ends connected respectively to the water input end and the water output end; and
a switch installation portion, formed integrally into a body, and is connected to the water passage channel along a direction of a water route;
a plurality of water route switches, disposed on the switch installation portion in sequence along the direction of the water route, and connected in series using their internal water routes;
wherein, its operation mode is classified into a direct output mode and a series shunt mode, such that a water passage channel inner chamber acts in cooperation with the water route switch in water route switching,
when the water route switch is in the direct output mode, water flowing through the water route switch is guided to the water output end of the water passage channel by the water passage channel inner chamber, and
when the water route switch is in the series shunt mode, water flowing through the water route switch is guided to a subsequent water route element connected in series with the water route switch, by the water passage channel inner chamber.

2. The mini water route structure as claimed in claim 1, wherein the water passage channel and the switch installation portion are formed integrally into a body.

3. The mini water route structure as claimed in claim 1, wherein the water passage channel and the switch installation portion are formed integrally into a body through injection molding.

4. The mini water route structure as claimed in claim 1, further comprising: a driving piece, disposed and connected onto the water route switches, to drive the water route switches to switch between operation modes.

5. The mini water route structure as claimed in claim 1, wherein
when the water route switch is in the series shunt mode, and
in case the water route switch is a last one of a sequence disposed on the switch installation portion, then water flowing through the water route switch is guided by the water passage channel inner chamber to the water output end of the water passage channel; and
in case the water route switch is not the last one of the sequence disposed on the switch installation portion, then water flowing through the water route switch is guided by the water passage channel inner chamber to a next water route switch connected in series with the water route switch.
